# NOUVEAU FASCICULE DE BREVET EUROPEEN

(11) **EP 2 174 057 B2**
(45) Date de publication et mention de la décision concernant l'opposition: **26.07.2017**
(45) Mention de la délivrance du brevet: 16.03.2011
(21) Numéro de dépôt: 08788195.9
(22) Date de dépôt: 17.04.2008
(51) Int. Cl.: F17C 5/06

(54) **PROCEDE DE REMPLISSAGE D'UN GAZ SOUS PRESSION DANS UN RESERVOIR**
VERFAHREN ZUM FÜLLEN EINES TANKS MIT UNTER DRUCK STEHENDEM GAS
METHOD FOR FILLING A TANK WITH PRESSURISED GAS

(30) Priorité: 23.07.2007 FR 0756669
(43) Date de publication de la demande: 14.04.2010
(73) Titulaire: L'Air Liquide Société Anonyme pour l'Etude et l'Exploitation des Procédés Georges Claude, 75007 Paris (FR)
(72) Inventeur: ALLIDIERES, Laurent, F-38410 Saint Martin d'Uriage (FR)
(74) Mandataire: De Cuenca, Emmanuel Jaime
(86) Numéro de dépôt international: PCT/FR2008/050682
(87) Numéro de publication internationale: WO 2009/013415

(56) Documents cités:
- EP-A- 0 995 943
- WO-A-03/060374
- DE-A1-102005 039 202
- DE-C1- 19 650 999
- FR-A- 2 891 347
- US-A- 6 152 191
- US-B1- 6 792 981

## Description

La présente invention concerne un procédé de remplissage d'un gaz sous pression dans un réservoir.

L'invention concerne plus particulièrement un procédé de remplissage d'un gaz sous pression dans un réservoir, notamment de l'hydrogène dans le réservoir d'un véhicule, au moyen d'une station de remplissage comprenant une pluralité de contenants tampons prévus pour contenir du gaz sous pression et remplir le réservoir par des phases d'équilibrage de pression successives et un dispositif de génération de gaz pressurisé prévu pour assurer le remplissage desdits contenants tampon à partir d'une source de fluide.

Le remplissage rapide (typiquement en moins de 15 minutes) de réservoirs à haute pression (700 bars au-delà notamment) embarquées à bord de véhicules (par exemple de l'hydrogène gazeux pour des véhicules munis piles à combustible) est réalisé classiquement par des équilibrages de pression successifs avec une pluralité de contenants tampon à haute pression. Ce remplissage « en cascade » est classiquement obtenu en réalisant une succession d'équilibrages de pression entre, d'une part, le réservoir cible à remplir et, d'autre part, des contenants tampons de pression croissante (par exemple 200 bar puis 300 bar puis 450 bar puis 850 bar).

Cette méthode bien connue est décrite abondamment dans la littérature, notamment pour des applications de gaz naturel ou d'hydrogène.

Cette méthode connue de remplissage par équilibrages de pression requière cependant un nombre important de contenants à haute pression. Ceci augmente donc les risques de fuites et la quantité de gaz qui doit être stockée sur un site. Typiquement, la quantité de gaz immobilisée par cette méthode est de l'ordre de trois fois la consommation journalière moyenne utilisée par la station. Ceci peut nécessiter des demandes d'autorisations particulières dans le cas où le gaz est inflammable ou dangereux.

De plus, par cette méthode, pour permettre des remplissages successifs de plusieurs véhicules sans temps d'attente trop important, il est nécessaire d'augmenter le nombre de contenants tampons à haute pression disponibles et donc nécessairement la taille de la station de remplissage.

Selon une autre technologie de remplissage connue dite de « remplissage lent » (par exemple durée supérieure à 15 minutes), le gaz est introduit dans le réservoir directement à partir d'une source d'hydrogène basse pression via un compresseur.

Cette méthode de remplissage par « compression directe » ne permet pas en effet de remplir des réservoirs en moins de 15 minutes sauf à utiliser des compresseurs (ou pompes cryogéniques) de tailles très importantes nécessitant des puissances électriques très élevées (de l'ordre par exemple de 70kW pour une pompe liquide et plus de 300kW pour un compresseur).

Un but de la présente invention est de pallier tout ou partie des inconvénients de l'art antérieur relevés ci-dessus.

A cette fin, le procédé selon l'invention, est conforme à la définition de la revendication 1.

Le document US6792981, considéré comme reflétant l'art antérieur le plus proche, décrit un remplissage d'un réservoir utilisant un compresseur puisant son gaz à compresser dans un stockage de gaz à haute pression. Simultanément au remplissage par le compresseur, le stockage de gaz à haute pression transfère du gaz au réservoir par équilibrage de pression. Lorsque la pression dans le réservoir atteint la pression du stockage de gaz à haute pression, l'équilibrage entre le stockage de gaz à haute pression et le réservoir est interrompu, c'est-à-dire que seul le compresseur continue à remplir le réservoir.

Par ailleurs, des modes de réalisation de l'invention peuvent comporter l'une ou plusieurs des caractéristiques suivantes :
- le dispositif de génération de gaz pressurisé alimente directement en gaz le réservoir au moins pendant une partie d'une phase d'équilibrage de pression entre au moins un contenant tampon et le réservoir,
- le dispositif de génération de gaz pressurisé et les contenants tampons sont raccordés en parallèle à une ligne d'alimentation commune destinée à être raccordée au réservoir,
- le dispositif de génération de gaz pressurisé comprend un compresseur et en ce que la source est raccordée au dispositif de génération de gaz et comprend l'un au moins parmi : une conteneur de gaz pressurisé mobile, un système de synthèse ou de production dudit gaz, un réseau de distribution dudit gaz, l'un au moins des contenants tampon,
- le premier contenant tampon utilisé comme source par le compresseur est distinct du second contenant tampon en cours d'équilibrage de pression,
- au moins une partie des contenant ou tampons sont reliés à l'entrée d'aspiration du compresseur via une ligne comprenant au moins une vanne d'isolement.

D'autres particularités et avantages apparaîtront à la lecture de la description ci-après, faite en référence aux figures dans lesquelles :
- la figure 1 représente, sur une même figure schématique, la structure et le fonctionnement de plusieurs variantes d'une premier mode de réalisation d'un système de remplissage ne faisant pas partie de l'invention
- la figure 2 représente une vue schématique illustrant la structure et le fonctionnement d'une variante de réalisation du système de remplissage de la figure 1,
- la figure 3 représente une vue schématique illustrant la structure et le fonctionnement d'un second mode de réalisation du système de remplissage selon l'invention,
- la figure 4 représente une vue schématique et partielle illustrant la structure et le fonctionnement d'un troisième mode de réalisation du système de remplissage ne faisant pas partie de l'invention.

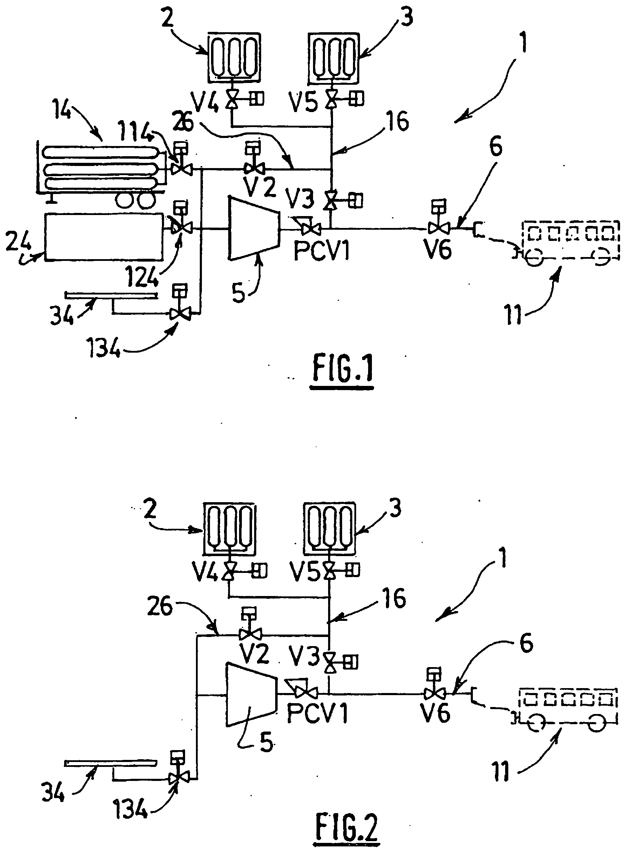

La station 1 de remplissage représentée à la figure 1 comprend classiquement deux contenants 2, 3 tampons de gaz (ou « capacités tampons ») reliés en parallèle à une ligne d'alimentation 6 destinée à être raccordée à l'entrée d'un réservoir 11 à remplir. Par soucis de simplification, le réservoir 11 à remplir est symbolisé par un véhicule. Chaque contenant 2, 3 tampon est relié à la ligne d'alimentation 6 via une vanne respective V4, V5 puis une conduite 16 commune comportant également une vanne V3.

La station 1 comporte également au moins un compresseur 5 situé sur la ligne 6 de remplissage. L'entrée du compresseur 5 est reliée fluidiquement à au moins une source de gaz 14, 24, 34. La sortie du compresseur 5 est reliée fluidiquement à la ligne 6 de remplissage via, par exemple, un contrôleur PCV1 de pression (vanne de contrôle de la pression et/ou du débit). Classiquement, le compresseur 5 est prévu pour assurer le remplissage des contenants 2, 3 tampons à partir de gaz à une pression plus basse fourni par une source 14, 24, 34. Dans l'exemple de la figure 1 trois sources 14, 24, 34 sont connectées en parallèle à l'entrée du compresseur 5 via des vannes respectives (un conteneur 14 de gaz pressurisé mobile tel qu'un semi-remorque de bouteilles ou cadre de bouteilles de gaz à haute pression, un système 24 de synthèse ou de production dudit gaz, un réseau 34 de distribution dudit gaz).

Bien entendu, et comme représenté à la figure 2, une seule source de gaz est en général nécessaire (par exemple un réseau 34 s'il est disponible symbolisé par un pipeline).

La ou les sources 14, 24, 34 de gaz peuvent également être reliées directement à la ligne 6 d'alimentation via une conduite 26 comprenant une vanne V2 (directement c'est-à-dire sans passer par le compresseur 5). Par exemple la conduite 26 source est raccordée à la conduite 16 commune des contenants 2, 3 tampon, en amont de la vanne V3. Cette conduite 26 source permet, le cas échéant, de réaliser un premier équilibrage de pression entre d'une part la source 34 et, d'autre part, un contenant 2, 3 tampon ou le réservoir 11.

Ainsi, le compresseur 5 est prévu pour charger les contenants 2, 3 tampon à des pressions de stockage différentes. Lorsque les contenants 2, 3 tampons sont remplis, le remplissage d'un réservoir 11 peut être réalisé selon la méthode connue d'équilibrages de pression successifs (les contenants 2, 3 tampons sont utilisés les uns à la suite des autres selon un ordre de pression de stockage croissant). Après un ou plusieurs remplissages, les contenants 2, 3 tampons peuvent être remplis à nouveau selon le processus ci-dessus. Classiquement il est également possible d'assurer le ré-remplissage d'un contenant 2, 3 tampon pendant qu'un autre contenant 2, 3 tampon est utilisé pour remplir le réservoir 11.

Selon une particularité avantageuse de l'invention, la station 1 réalise simultanément au transfert de gaz à partir d'un contenant 2, 3 tampon vers le réservoir 1, un transfert de gaz directement de la source 34 via le compresseur 5 (directement c'est-à-dire que le gaz ne passe pas par un contenant tampon). Lors d'une phase d'équilibrage de pression la ligne 6 d'alimentation reçoit donc en même temps du gaz fourni par le compresseur 5 et du gaz fourni par un contenant 2, 3 tampon.

L'invention permet ainsi un remplissage particulièrement rapide via un compresseur 5 avec un apport de gaz supplémentaire simultané venant de contenants 2, 3 à haute pression.

L'invention permet ainsi d'effectuer un remplissage rapide avec un compresseur 5 ayant une taille et une puissance relativement plus petites qu'une machine de compression dimensionnée pour remplir elle seule directement le réservoir 11. L'invention permet également de diminuer la taille des stockages de contenants 2,3 tampons. La station 1 selon l'invention permet également des remplissages dits "partiels" selon l'art antérieur, c'est à dire sans faire fonctionner simultanément le compresseur 5 en appoint (notamment en cas de maintenance ou panne de ce dernier).

Dans un exemple de fonctionnement décrit en référence à la figure 2, le remplissage du réservoir 11 peut se dérouler comme suit. Dans une première phase la station 1 est commandée pour réaliser un premier équilibrage de pression entre un premier contenant 2 tampon (celui des contenants tampons ayant la pression la plus basse mais supérieure à celle du réservoir 11) et le réservoir 11. Afin d'augmenter la quantité de gaz transféré, le compresseur 5 est mis en marche pendant cette phase d'équilibrage et alimente simultanément la ligne 6 de remplissage.

Dans une seconde phase la station 1 commande un deuxième équilibrage de pression entre le réservoir 11 et un deuxième contenant 3 tampon. Le compresseur 5 est également activé pendant cette deuxième étape pour participer simultanément au remplissage.

Dans les exemples décrits ci-dessus et ci-dessous seuls deux contenants 2, 3 tampons ont été représentés. Bien entendu, l'invention ne se limite pas à cette configuration et peut, par exemple, comprendre plus de deux contenants tampons 2, 3.

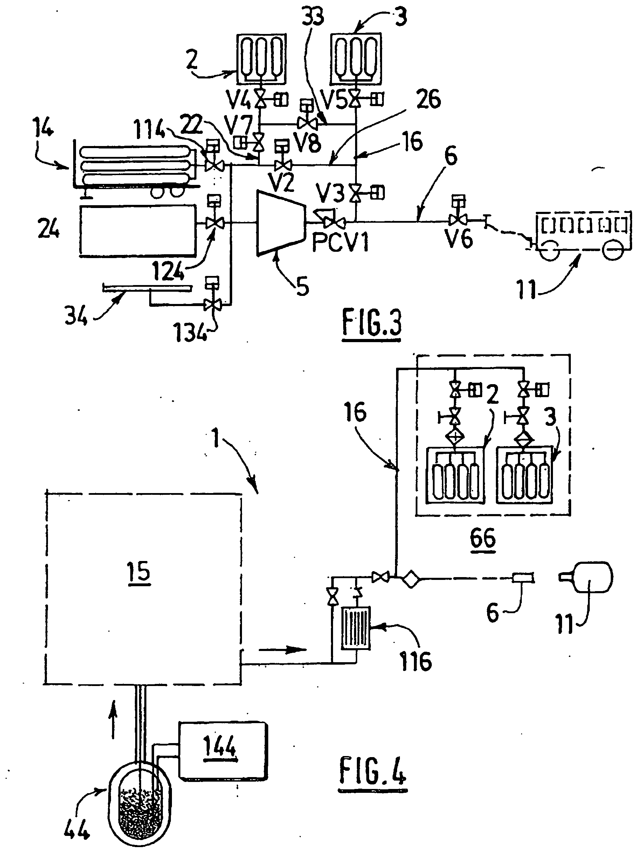

La figure 3 illustre un exemple d'un second mode de réalisation de l'invention dans lequel, simultanément à un équilibrage de pression entre un contenant tampon 3 et le réservoir 11, le compresseur 5 fournit un appoint de gaz à partir d'un autre contenant 2 tampon (et non plus à partir de l'une des sources 14, 24, 34 « classiques » ci-dessus).

Par exemple, le compresseur 5 assure l'appoint de gaz simultané en soutirant du gaz depuis « l'avant dernier contenant tampon » 2 haute pression (celui qui a déjà servi lors d'un équilibrage de pression avec le réservoir 11). Bien entendu, par soucis d'efficacité ce contenant 2 tampon est de préférence utilisé comme source de gaz du compresseur 5 que s'il contient du gaz à une pression encore supérieure à la pression de la source 34 « classique ». Selon ce mode de réaliser un appoint de gaz de remplissage par le compresseur qui est augmenté par rapport aux solutions connues car la pression d'aspiration du gaz entrant dans le compresseur est relativement plus élevée et s'adapte en temps réel aux différentes phases d'équilibrage et aux pressions disponibles. De plus, ceci augmente le débit du compresseur.

Dans ce mode de réalisation la station 1 peut prévoir au moins une ligne 22, 33 reliant fluidiquement au moins un contenant 2, 3 tampon avec l'entrée de compresseur 5. Ces lignes 22, 33 comportent de préférence des vannes respectives V7, V8 (cf. figure 3).

La figure 4 illustre un exemple de réalisation d'un troisième mode de réalisation ne faisant pas partie de l'invention dans lequel la ou les sources de gaz basse pression et le compresseur 5 sont remplacées par un stockage de gaz liquéfié 44 associé à un système de pompage 15 et de vaporisation 116 du gaz liquéfié.

La liquide cryogénique est prélevé du stockage 44 dans un circuit 15 connu en soit et non représenté en détail par soucis de concision. Le liquide cryogénique est ensuite vaporisé (échangeur 116) en amont de la ligne 6 d'alimentation.

Comme précédemment, deux contenants 2, 3 tampons sont reliés 16 à la ligne 6 d'alimentation. Par soucis de simplification, les circuits et dispositifs de contrôle du stockage liquide 44 sont symbolisés par un bloc 144. De même, les composants de contrôle connus (vannes capteurs, filtres, sécurités..) n'ont pas été représentés par soucis de simplification sur la ligne 6 de remplissage.

On conçoit donc aisément que, tout en étant de structure simple et peu coûteuse, l'invention permet à la fois d'augmenter le débit de gaz transféré lors d'un remplissage, de diminuer le temps du remplissage et de diminuer la capacité journalière de gaz de remplissage immobilisée dans la station. L'invention permet notamment d'améliorer le fonctionnement de station déjà existantes.

## Revendications

1. Procédé de remplissage d'un gaz sous pression dans un réservoir (11), notamment de l'hydrogène dans le réservoir (11) d'un véhicule, au moyen d'une station (1) de remplissage comprenant :
- une pluralité de contenants (2, 3) tampon prévus pour contenir du gaz sous pression et remplir le réservoir (11) par des phases d'équilibrage de pression successives entre d'une part le réservoir (11) et, d'autre part les contenants tampon de pression croissante,
- un dispositif (5; 15, 16) de génération de gaz pressurisé prévu pour assurer le remplissage desdits contenants (2, 3) tampon à partir d'une source (14, 24, 34, 44) de fluide, le procédé comportant une étape de remplissage du réservoir (11) par transfert de gaz à partir d'un contenant (2, 3) tampon et, simultanément, par transfert de gaz directement de la source (14, 24, 34) via le dispositif (5 ; 15, 16) de génération de gaz, le dispositif de génération de gaz pressurisé comprenant un compresseur (5) raccordé aux contenants (2, 3) tampons **caractérisé en ce que** le compresseur (5) alimente en gaz le réservoir (11) à partir d'une source de gaz constituée d'un premier contenant (2) tampon au moins pendant une partie d'une phase d'équilibrage de pression entre au moins un second contenant (3) tampon et le réservoir (11), les contenant (2, 3) tampons étant utilisés successivement comme sources par le compresseur (5) après leur utilisation en équilibrage de pression avec le réservoir (11).

2. Procédé selon la revendication 1, **caractérisé en ce que** le dispositif (5 ; 15, 16) de génération de gaz pressurisé alimente directement en gaz le réservoir (11) au moins pendant une partie d'une phase d'équilibrage de pression entre au moins un contenant (2, 3) tampon et le réservoir (11).

3. Procédé selon la revendication 1 ou 2, **caractérisé en ce que** le dispositif (5 ; 15, 16) de génération de gaz pressurisé et les contenants (2, 3) tampons sont raccordés en parallèle à une ligne (6) d'alimentation commune destinée à être raccordée au réservoir (11).

4. Procédé selon l'une quelconque des revendications 1 à 3, **caractérisé en ce que** le dispositif de génération de gaz pressurisé comprend un compresseur (5) et **en ce que** la source est raccordée au dispositif (5 ; 15, 16) de génération de gaz et comprend l'un au moins parmi : une conteneur (14) de gaz pressurisé mobile, un système (24) de synthèse ou de production dudit gaz, un réseau (34) de distribution dudit gaz, l'un au moins des contenants (2, 3) tampon.

5. Procédé selon l'une quelconque des revendications 1 à 4, **caractérisé en ce que** le premier contenant (2, 3) tampon utilisé comme source par le compresseur (5) est distinct du second contenant (3, 2) tampon en cours d'équilibrage de pression.

6. Procédé selon l'une quelconque des revendications 1 à 5, **caractérisé en ce qu'**au moins une partie des contenant (2, 3) tampons sont reliés à l'entrée d'aspiration du compresseur (5) via une ligne comprenant au moins une vanne (V7, V8) d'isolement.

## Patentansprüche

1. Verfahren zum Füllen eines mit Druck beaufschlagten Gases in einen Vorratsbehälter (11), insbesondere von Wasserstoff in den Vorratsbehälter (11) eines Fahrzeugs, mittels einer Befüllungsstation (1), mit:
- mehreren Pufferaufnahmeelementen (2, 3), die dazu vorgesehen sind, Gas unter Druck aufzunehmen und den Vorratsbehälter (11) durch aufeinander folgende Druckausgleichsphasen zwischen einerseits dem Vorratsbehälter (11) und andererseits den Pufferaufnahmeelementen mit steigendem Druck zu befüllen,
- einer Vorrichtung (5; 15; 16) für die Erzeugung von mit Druck beaufschlagtem Gas, die vorgesehen ist, um das Befüllen der Pufferaufnahmeelemente (2, 3) anhand einer Fluidquelle (14, 24, 34, 44) sicherzustellen, wobei das Verfahren einen Schritt des Befüllens des Vorratsbehälters (11) durch Transportieren von Gas von einem Pufferaufnahmeelement (2, 3) und gleichzeitig durch Transportieren von Gas direkt von der Quelle (14, 24, 34) über die Gaserzeugungsvorrichtung (5; 15, 16) enthält, wobei die Vorrichtung zum Erzeugen von mit Druck beaufschlagtem Gas einen Kompressor (5) aufweist, der mit den Pufferaufnahmeelementen (2, 3) verbunden ist, **dadurch gekennzeichnet, dass** der Kompressor (5) den Vorratsbehälter (11) ausgehend von einer Gasquelle, die aus einem ersten Pufferaufnahmeelement (2) gebildet ist, wenigstens während eines Teils einer Druckausgleichsphase zwischen wenigstens einem zweiten Pufferaufnahmeelement (3) und dem Vorratsbehälter (11) versorgt, wobei die Pufferaufnahmeelemente (2, 3) nacheinander als Quellen für den Kompressor (5) nach ihrer Verwendung beim Druckausgleich mit dem Vorratsbehälter (11) verwendet werden.

2. Verfahren nach Anspruch 1, **dadurch gekennzeichnet, dass** die Vorrichtung (5; 15, 16) für die Erzeugung von mit Druck beaufschlagtem Gas den Vorratsbehälter (11) wenigstens während eines Teils einer Druckausgleichsphase zwischen wenigstens einem Pufferaufnahmeelement (2, 3) und dem Vorratsbehälter (11) direkt mit Gas versorgt.

3. Verfahren nach Anspruch 1 oder 2, **dadurch gekennzeichnet, dass** die Vorrichtung (5; 15, 16) für die Erzeugung von mit Druck beaufschlagtem Gas und die Pufferaufnahmeelemente (2, 3) mit einer gemeinsamen Versorgungsleitung (6), die dazu vorgesehen ist, mit dem Vorratsbehälter (11) verbunden zu werden, parallel verbunden sind.

4. Verfahren nach einem der Ansprüche 1 bis 3, **dadurch gekennzeichnet, dass** die Vorrichtung für die Erzeugung von mit Druck beaufschlagtem Gas einen Kompressor (5) enthält und dass die Quelle mit der Vorrichtung (5; 15, 16) für die Erzeugung von Gas verbunden ist und wenigstens eines der Folgenden enthält: einen beweglichen Behälter (14) für mit Druck beaufschlagtes Gas, ein System (24) für die Synthese oder Produktion des Gases, ein Gasverteilungsnetz (34), wenigstens eines der Pufferaufnahmeelemente (2, 3).

5. Verfahren nach einem der Ansprüche 1 bis 4, **dadurch gekennzeichnet, dass** im Verlauf des Druckausgleichs das erste Pufferaufnahmeelement (2, 3), das als Quelle von dem Kompressor (5) verwendet wird, von dem zweiten Pufferaufnahmeelement (3, 2) verschieden ist.

6. Verfahren nach einem der Ansprüche 1 bis 5, **dadurch gekennzeichnet, dass** wenigstens einige der Pufferaufnahmeelemente (2, 3) mit dem Saugeingang des Kompressors (5) über eine Leitung verbunden sind, die wenigstens einen Trennschieber (V7, V8) enthält.

## Claims

1. Method for filling a tank (11) with pressurized gas, particularly hydrogen in the tank (11) of a vehicle, using a filling station (1) that comprises:
- a plurality of buffer containers (2, 3) for containing the pressurized gas and filling the tank (11) through successive pressure balancing phases balancing the pressures between the tank (11) and the buffer containers of increasing pressure;
- a device (5; 15, 16) for generating a pressurized gas and for filling said buffer containers (2, 3) from a fluid source (14, 24, 34, 44); said method comprising a tank (11) filling step by gas transfer from a buffer container (2, 3) and simultaneously by gas transfer directly from the source (14, 24, 34) via the gas generation device (5; 15, 16), the pressurized-gas generation device including a compressor (5) connected to the buffer containers (2, 3), **characterized in that** the compressor (5) supplies gas to the tank (11) from a gas source including a first buffer container (2) for at least part of a pressure balancing phase between at least one second buffer container (3) and the tank (11), the buffer containers (2, 3) being successively used as sources by the compressor (5) after being used for pressure balancing with the tank (11).

2. Method according to Claim 1, **characterized in that** the pressurized gas generation device (5; 15, 16) directly feeds the tank (11) with gas at least during part of a pressure balancing phase between at least one buffer container (2, 3) and the tank (11).

3. Method according to either of Claims 1 and 2, **characterized in that** the pressurized gas generation device (5; 15, 16) and the buffer containers (2, 3) are connected in parallel to a common feed line (6) for connecting to the tank (11).

4. Method according to any one of Claims 1 to 3, **characterized in that** the pressurized gas generation device comprises a compressor (5) and **in that** the source is connected to the pressurized gas generation device (5; 15, 16) and comprises at least one form: a mobile pressurized gas container (14), a system (24) for synthesizing or producing said gas, a network (34) for distributing said gas, at least one of the buffer containers (2, 3).

5. Method according to any one of Claims 1 to 4, **characterized in that** the first buffer container (2, 3) used as a source by the compressor (5) is different from the second buffer container (3, 2) during pressure balancing.

6. Method according to any one of Claims 1 to 5, **characterized in that** at least part of the buffer containers (2, 3) are connected to the suction inlet of the compressor (5) via a line comprising at least one shutoff valve (V7, V8).
